# FASCICULE DE BREVET EUROPEEN

(11) **EP 3 825 458 B1**
(45) Date de publication et mention de la délivrance du brevet: **05.07.2023**
(21) Numéro de dépôt: 20208269.9
(22) Date de dépôt: 18.11.2020
(51) Int. Cl.: D07B 1/06

(54) **CABLE DE LEVAGE HYBRIDE, PROCEDE POUR SA REALISATION ET TREUIL METTANT EN UVRE UN TEL CABLE**
HYBRIDES HUBSEIL, SEIN HERSTELLUNGSVERFAHREN UND WINDE, DIE DIESES SEIL VERWENDET
HYBRID LIFTING CABLE, METHOD FOR MANUFACTURING SAME AND WINCH IMPLEMENTING SUCH A CABLE

(30) Priorité: 22.11.2019 FR 1913064
(43) Date de publication de la demande: 26.05.2021
(73) Titulaire: REEL, 69450 Saint-Cyr au Mont d'Or (FR)
(72) Inventeur: CAUQUELIN, Adrien, 69009 Lyon (FR)
(74) Mandataire: Cabinet Laurent & Charras

(56) Documents cités:
- CN-A- 105 316 967
- GB-A- 2 495 975
- TW-B- 451 014
- US-A- 4 217 748
- Anonymous: "Fall Protection Only RETRACTABLE TYPE FALL ARRESTER NCS", , 3 novembre 2018 (2018-11-03), XP055771817, Internet Article Extrait de l'Internet: URL:https://web.archive.org/web/2018110316 1125/http://www.neofeu.com/en/produit/36.r etractable%20type%20fall%20arrester/ [extrait le 2021-02-03]

## Description

### DOMAINE DE L'INVENTION

L'invention se rapporte au domaine des câbles de levage. Elle vise plus particulièrement les câbles de levage destinés à être mis en oeuvre au niveau de treuils, qu'il s'agisse de treuils classiques à tambour direct ou de treuils dits à cabestan.

### ETAT ANTERIEUR DE LA TECHNIQUE

Dans le domaine du levage, il est connu de mettre en oeuvre des câbles très résistants en traction en raison même de leur destination. Quand en plus de tels câbles sont mis en oeuvre avec des éléments de renvoi, tels que poulies ou cabestan, on cherche également à ce que ces câbles présentent une grande résistance en flexion, en raison même des nombreuses flexions ou torsions dont ils sont l'objet en suite des opérations d'enroulage ou de déroulage par rapport à un tambour ou un cabestan.

A cet effet, depuis longtemps déjà, on met en oeuvre des câbles toronnés en acier qui présentent cette double caractéristique. Chaque toron comprend un nombre déterminé de fils métalliques, et les câbles sont réalisés sur des machines appropriées de manière à constituer des couches superposées. Ces câbles de traction sont appelés à fonctionner avec un engin de levage, notamment un treuil, et corollairement sont manipulés par les opérateurs en aval dudit engin de levage.

L'expérience démontre qu'au fur et à mesure de l'utilisation de tels câbles en acier, quand bien même ces derniers sont toronnés, le frottement du câble sur le tambour de levage proprement dit, ou dans le cadre d'un treuil à cabestan, sur le cabestan lui-même, engendre, en raison des frottements une usure des fils métalliques constitutifs des torons extérieurs, se matérialisant par l'apparition à la périphérie du câble, d'une rupture des brins constituant un critère de dépose et de remplacement du câble.

Par ailleurs, l'utilisation de tels câble de levage en acier s'avère problématique dans le cas particulier de l'utilisation de treuils à cabestan.

Il doit en effet être rappelé que dans les treuils à cabestan, le câble est soumis à des phénomènes de friction générés pas le glissement dudit câble sur le ou les tambours du cabestan dans le sens d'enroulement. Par ailleurs, dans un cabestan à simple tambour, le câble est en outre soumis à un glissement latéral le long de l'axe du tambour. Ces glissements génèrent une usure des fils constituant le câble. En revanche, dans un cabestan à double tambour, les phénomènes de glissement latéral suivant l'axe des tambours sont supprimés, mais une flexion alternée s'applique sur le câble qui est plié et déplié dans l'entraxe entre les tambours lors de chaque enroulement. La pression de contact entre les fils ou brins du câble et les tambours à chaque zone de pliure du câble engendre également une altération de l'intégrité du câble. Enfin, le câble est soumis à des phénomènes de torsion dans le cabestan qui, au niveau de la surface de contact entre les fils ou brins du câble et le cabestan, se traduit par de la friction et donc de l'usure dudit câble.

Par ailleurs, dans le cadre d'un câble de treuil pour hélicoptère, il n'est pas rare d'observer des chocs entre le câble et des obstacles extérieurs susceptibles de se produite en cours d'opération, pouvant là encore affecter l'intégrité du câble.

Afin de surmonter ces difficultés, on a proposé d'enrober de tels câbles en acier, par exemple avec du PVC (polychlorure de vinyle) ou avec du polyamide. Cet enrobage peut typiquement résulter d'une opération d'extrusion. Si certes, un tel enrobage augmente la durée de vie de ces câbles, il engendre une surépaisseur du câble, augmentant l'encombrement généré, notamment au niveau d'un tambour de stockage par exemple.

On connaît également le principe du gainage d'un câble acier au moyen d'une structure textile, tel que par exemple décrit dans le document GB 2 495 975, notamment à des fins d'ignifugation. Cependant, de telles gaines textiles, si elles remplissent certes leur fonction première, à savoir protection contre l'usure en raison de frottement contre une arête tranchante, ou l'ignifugation, ne présentent pas une adhérence, et en tout cas une intimité suffisante avec le câble acier pour assurer une réelle protection dudit câble.

L'objectif visé par la présente invention est de surmonter ces différents inconvénients, et notamment, de sécuriser toute utilisation d'un tel câble de levage dans le cadre de son utilisation avec un treuil.

Ainsi, et afin de pallier ces sources d'endommagement du câble en raison du contact sur un le tambour d'un treuil ou sur un simple ou un double tambour du cabestan d'un treuil à cabestan, l'invention propose de recouvrir le câble par une gaine tressée à fibre synthétique.

Des tests menés sur des câbles gainés ont montré qu'en cas de solidarisation insuffisante de la gaine sur le câble, un glissement entre l'âme du câble et la gaine peut se produire à l'usage et ainsi provoquer l'endommagement de la gaine.

Afin d'éviter ce phénomène, l'invention prévoit un mode de fabrication du câble dans lequel la gaine de fibres synthétiques est tressée directement de manière serrée sur le câble métallique.

### EXPOSE DE L'INVENTION

A cet effet, l'invention vise un câble de levage constitué d'une âme en acier revêtue à sa périphérie d'une gaine textile, dans laquelle ladite gaine textile est une gaine tressée réalisée en matériau synthétique résistant à l'abrasion. Plus spécifiquement, l'invention vise un câble de levage mis en oeuvre dans un treuil de levage pour hélicoptère comportant au moins un tambour de levage, ledit câble étant constitué d'une âme en acier revêtue à sa périphérie d'une gaine textile, dans laquelle ladite gaine textile est une gaine tressée directement sur l'âme en acier, et réalisée en un matériau synthétique résistant à l'abrasion, dans lequel le diamètre moyen de l'âme en acier est compris entre 5 et 6 millimètres, et dans lequel l'épaisseur de la gaine est comprise entre 3 et 10 % du diamètre du câble.

En d'autres termes, l'invention consiste à revêtir un câble acier de facture traditionnelle, et par exemple un câble toronné de l'art antérieur, d'une gaine textile obtenue par tressage et réalisée en matériau résistant à l'abrasion, dont les caractéristiques, dimensionnelles notamment sont spécifiques. Ainsi l'épaisseur de la gaine s'avère tout à la fois suffisante pour assurer la protection du câble acier, sans altérer de manière trop significative le diamètre du câble.

Typiquement, le matériau synthétique mis en oeuvre pour la gaine est en aramide. D'autres matériaux peuvent cependant être mis en oeuvre dans l'invention, parmi lesquels le HMPE (acronyme anglo-saxon « *High Modulus Polyethylene* ») c'est-à-dire un polyéthylène de masse molaire élevée, le PBO (acronyme pour le poly-p-phénylène benzobisoxazole), sans que ces mentions soient exhaustives.

La réalisation de la gaine autour du câble acier par tressage présente l'avantage d'aboutir à un serrage extrêmement intime de la gaine sur le câble, permettant d'éviter tout risque de rétractation ou glissement de la gaine par rapport au câble, communément appelé par l'effet dit « chaussette ». En d'autres termes, en raison du tressage ainsi opéré de la gaine sur le câble, on confère à ce dernier une plus grande intégrité physique, permettant de conserver ses propriétés mécaniques fondamentales de base (résistance en traction et en flexion), outre l'intégrité extérieure dudit câble en évitant, en raison de la diminution des phénomènes de friction du câble sur l'engin de levage et plus particulièrement sur le tambour d'un treuil, et donc l'usure prématurée de la surface extérieure du câble.

La mise en oeuvre d'une telle gaine intimement associée à l'âme en acier permet d'éviter la casse des brins extérieurs du câble acier, optimisant en conséquence les conditions d'utilisation d'un tel câble par l'opérateur du treuil, lorsque l'utilisateur de ce treuil est amené à être en contact avec le câble de levage.

Corollairement, la mise en oeuvre d'un matériau tel que l'aramide, dont les propriétés mécaniques de résistance en traction sont proches voire supérieures à celles de l'acier, permet de contribuer à la résistance mécanique du câble.

En outre, et selon une caractéristique avantageuse de l'invention, ce choix particulier de matériau textile, en raison de ses caractéristiques intrinsèques, permet l'utilisation du câble hybride ainsi obtenu dans des conditions de température relativement étendues, typiquement entre -150 et + 200°C, qui peuvent être recherchées pour des applications particulières.

Avantageusement, on met en oeuvre un matériau synthétique, et notamment un aramide anti-UV, permettant d'optimiser la longévité d'un tel câble, étant rappelé que ce dernier a vocation à être utilisé quasiment systématiquement en extérieur, et donc soumis aux rayonnements solaires contenant, de manière connue, des UV.

Selon une caractéristique avantageuse de l'invention, le titre des brins constitutifs de la gaine aramide est compris dans une fourchette s'étendant entre 800 et 1700 dtex, de telle sorte à disposer d'une épaisseur de ladite gaine typiquement comprise entre 3 et 10 % du diamètre du câble, comme évoqué ci-dessus.

Selon une caractéristique avantageuse de l'invention, l'âme en acier est constituée d'un câble acier à propriétés anti-giratoires. De manière connue, un câble anti-giratoire présente des torons internes câblés en sens inverse, afin de conférer une certaine résistance à la rotation au câble.

Selon l'invention, le câble hybride ainsi obtenu a vocation à être mise en oeuvre au sein d'un treuil classique à tambour direct ou d'un treuil à cabestan simple ou double tambour embarqué au sein d'un hélicoptère. Comme indiqué ci-dessus, le particularisme d'un treuil à cabestan engendre des flexions et torsions du câble sur le ou les tambours constitutifs d'un tel cabestan. La mise en oeuvre du câble de l'invention permet de limiter les phénomènes d'usure, classiquement observés sur les treuils de l'art antérieur.

L'invention vise également un appareil de levage embarqué sur un hélicoptère, muni d'un treuil traditionnelle, ou d'un treuil à cabestan à simple ou double tambour mettant en oeuvre un câble conforme à l'invention.

### BREVE DESCRIPTION DES FIGURES

La manière dont l'invention peut être réalisée et les avantages qui en découlent ressortiront mieux de l'exemple de réalisation qui suit, donné à titre indicatif et non limitatif, à l'appui des figures annexées.
La figure 1 est une représentation schématique en perspective illustrant le câble gainé conforme à l'invention.
La figure 2 est une représentation schématique en section diamétrale du câble de la figure 1.
La figure 3 illustre le procédé de gainage de l'âme acier par une tresseuse selon l'invention.
La figure 4 est une représentation simplifiée d'un treuil notamment embarqué sur hélicoptère mettant en oeuvre un cabestan.

### DESCRIPTION DETAILLEE DE L'INVENTION

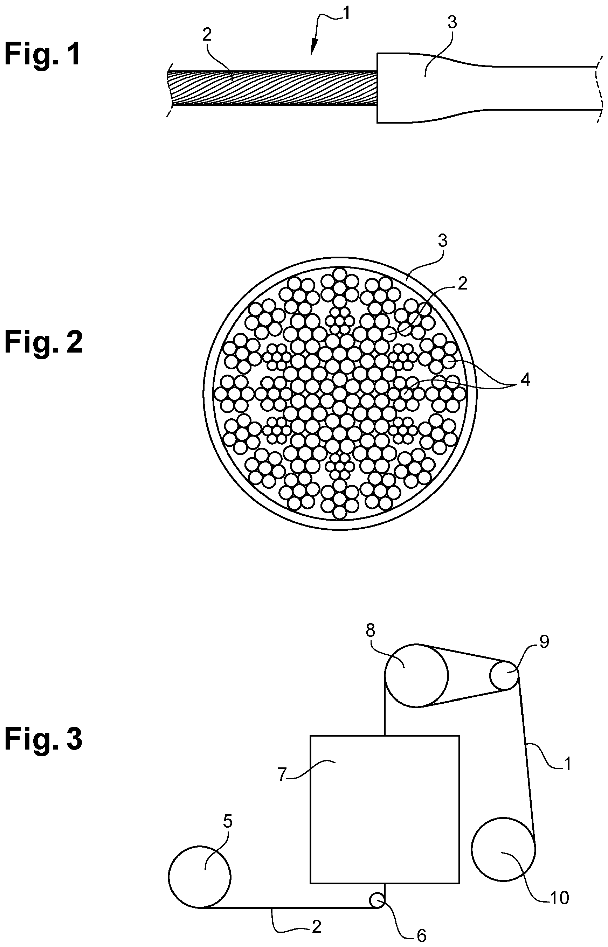

On a donc représenté en relation avec la figure 1 une représentation schématique du câble de levage (1) conforme à l'invention. Fondamentalement, celui-ci se compose d'une âme (2) en acier, en l'espèce constituée de torons (4) de fils métalliques à propriétés anti-giratoires. L'acier mis en oeuvre est un acier traditionnel pour les câbles de levage, conférant audit câble tout à la fois les propriétés de résistance en traction et en flexion nécessaires pour l'application envisagée. Ladite âme est sélectionnée en fonction de l'application envisagée, en l'espèce un câble de levage pour treuil embarqué sur hélicoptère.

Typiquement, dans l'application aux dispositifs de levage embarqués au sein d'un hélicoptère, le diamètre moyen de l'âme métallique (2) est voisin de 5 millimètres.

Selon l'invention, cette âme en acier est revêtue d'une gaine (3) réalisée dans l'exemple décrit en aramide par tressage. Plus précisément, l'aramide mise en oeuvre est par exemple commercialisé sous la marque déposée Black Technora^{®} (TEIJIN), qui présente l'avantage d'être résistant aux UV. Avec un diamètre de l'âme en acier (2) de 5 millimètres, l'épaisseur de la gaine (3) est voisine de 2/10 de millimètres. Typiquement, le diamètre dudit câble est susceptible de varier entre 5 et 6 millimètres, compte tenu des contraintes auxquelles il est soumis.

Comme déjà indiqué, cette gaine en aramide est tressée sur l'âme acier (2), par exemple au moyen de l'installation illustrée schématiquement en figure 3. Cette représentation est schématique et a pour vocation de mieux visualiser le trajet des éléments constitutifs du câble hybride (1).

Plus précisément, l'âme acier (2) est stockée sous forme de bobine (5), de laquelle est tirée ladite âme au moyen d'un cabestan de tirage (8, 9), l'âme acier en question transitant au sein d'une tresseuse (7), destinée à tresser sur l'âme (2) la gaine aramide de l'invention.

En l'espèce, cette tresseuse est par exemple du type commercialisé par les sociétés RIUS, SPIRALTEX, HERZOG ou COBRA.

Par exemple, le tressage est réalisé à l'aide de 32 fuseaux en montage 1/1, mettant en oeuvre un fil aramide du type précité de 1 670 décitex par fuseau sans torsion.

Ladite tresseuse met en oeuvre un ressort de course de pompage, propre à générer une forte tension des fils aramide, afin de permettre un gainage intime de la gaine aramide (3) sur l'âme en acier (2). Ce gainage intime est important, afin de permettre d'éviter tout mouvement intempestif notamment de glissement de la gaine par rapport à l'âme acier et ainsi éviter l'effet « chaussette ».

Selon l'invention, la filière de tressage pour un câble hybride destiné aux opérations de levage à l'aide d'un treuil embarqué sur un hélicoptère présente un diamètre voisin de 5 millimètres avec un pas de tressage voisin de 16 millimètres.

A l'issue de la tresseuse, le câble hybride (1) est stocké par exemple sur un touret ou sur une bobine (10).

Le câble hybride de levage résultant de cette opération de tressage conserve les propriétés de résistance à la traction et la flexion inhérentes à l'âme métallique proprement dite, et même les optimise en raison du choix particulier de la fibre textile mise en oeuvre pour le tressage.

En outre, cette gaine contribue à dissiper de l'énergie et donc à atténuer le phénomène de rebond en cas de rupture brutale du câble sous tension, par exemple en suite du choc dudit câble avec un obstacle, type arbre, bâtiment, etc.. Ce faisant, la sécurité de l'opérateur notamment est optimisée. La gaine contribue également à augmenter la protection du câble acier proprement dit en cas de choc avec un obstacle du type de ceux précédemment évoqués.

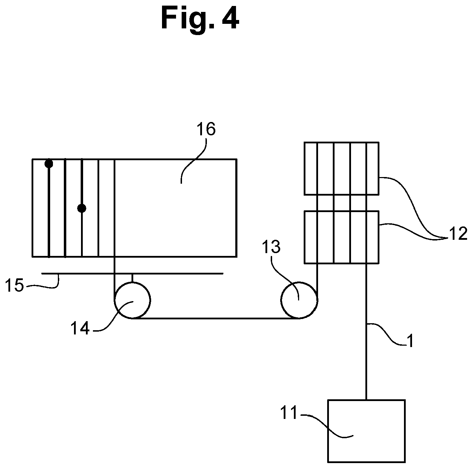

De plus, cette gaine confère au câble ainsi réalisé, une résistance à l'abrasion, tout particulièrement recherchée lorsqu'un tel câble de levage ou de traction est mis en oeuvre avec un appareil de levage du type treuil, classique à tambour direct ou à cabestan. Un tel treuil à cabestan est au demeurant illustré au sein de la figure 4.

Typiquement, dans l'exemple décrit, il se compose d'un double cabestan (12), d'enveloppe extérieure cylindrique, mû en rotation au moyen d'un moteur (non représenté), sur lequel vient s'enrouler le câble (1) conforme à l'invention. Ce double cabestan assure la traction effective du câble.

Ledit câble est ensuite stocké sur un tambour de stockage (16) après passage, le cas échéant, par des poulies de renvoi (13, 14). Le câble est enroulé par couches successives sur ledit tambour à l'aide d'un dispositif d'enroulement (15), du type vis de trancannage, permettant, de manière connue, de déplacer le câble sur la périphérie du tambour de stockage au fur et à mesure de l'enroulement, afin de réaliser des couches d'enroulement uniformes.

Enfin, la gaine en question, en raison de sa fonction protectrice, évite la cassure des brins extérieurs des torons en acier constitutifs de l'âme centrale, et dès lors garantit une plus grande sécurité et un plus grand confort pour les opérateurs de tels treuils.

Le treuil classique à tambour direct ou à cabestan, simple ou double tambour mettant en oeuvre un tel câble s'avère donc d'une utilisation plus fiable, et d'une maintenance du câble allégée.

## Revendications

1. Câble de levage (1) apte à être mis en oeuvre dans un treuil de levage embarqué au sein d'un hélicoptère, ledit câble étant constitué d'une âme en acier (2) revêtue à sa périphérie d'une gaine textile (3), câble dans lequel :
• ladite gaine textile (3) est une gaine tressée directement sur l'âme en acier (2), et est réalisée en un matériau synthétique résistant à l'abrasion,
• le diamètre moyen de l'âme en acier (2) est compris entre 5 et 6 millimètres, et
• l'épaisseur de la gaine (3) est comprise entre 3 et 10 % du diamètre du câble.

2. Câble de levage (1) selon la revendication 1 dans lequel le matériau synthétique constitutif de la gaine textile (3) est choisi dans le groupe comprenant l'aramide, le HMPE (« *High Modulus Polyethylene* ») et le PBO (poly-p-phénylène benzobisoxazole).

3. Câble de levage (1) selon la revendication 2, dans lequel le matériau synthétique est doté de propriétés anti-UV, et notamment est constitué d'aramide anti-UV.

4. Câble de levage (1) selon l'une des revendications 1 à 3, dans lequel l'âme en acier (2) est dotée de propriétés anti-giratoires.

5. Câble de levage (1) selon l'une des revendications 1 à 4, dans lequel le titre des brins constitutifs de la gaine textile (3) est compris entre 800 et 1700 décitex.

6. Appareil de levage destiné à être embarqué au sein d'un hélicoptère, comprenant un treuil apte à enrouler et dérouler un câble de levage (1), dans lequel ledit câble (1) est conforme à l'une quelconque des revendications 1 à 5.

7. Appareil de levage destiné à être embarqué au sein d'un hélicoptère, comprenant un treuil à cabestan simple ou double tambour apte à enrouler et dérouler un câble de levage (1), et un tambour de stockage (16) dudit câble de levage, dans lequel ledit câble (1) est conforme à l'une quelconque des revendications 1 à 5.

## Patentansprüche

1. Hubseil (1), geeignet zum Einsatz in einer Hubwinde, die sich in einem Hubschrauber befindet, dieses Seil besteht dabei aus einem Stahlkern (2), beschichtet an seiner Außenseite mit einer Textilhülle (3), bei diesem Seil:
• ist die erwähnte Textilhülle (3) direkt mit dem Stahlkern (2) verflochten, und besteht aus einem abriebfesten, synthetischen Material,
• liegt der mittlere Durchmesser des Stahlkerns (2) zwischen 5 und 6 Millimetern, und
• liegt die Dicke der Hülle (3) zwischen 3 und 10 % des Seildurchmessers.

2. Hubseil (1) nach Anspruch 1 bei dem das synthetischen Material, das die Textilhülle (3) bildet, ausgewählt wird aus der Gruppe zu der Aramid, HMPE (« *High Modulus* Polyethylene ») und PBO (Poly- (p-phenylen-benzobisoxazol) gehören.

3. Hubseil (1) nach Anspruch 2, bei dem das synthetischen Material über Anti-UV-Eigenschaften verfügt und insbesondere aus Anti- UV- Aramid besteht.

4. Hubseil (1) nach einem der Ansprüche 1 bis 3, bei dem der Stahlkern (2) verdrehsichere Eigenschaften aufweist.

5. Hubseil (1) nach einem der Ansprüche 1 bis 4, bei dem der Titer der Fasern, die die Textilhülle (3) bilden, zwischen 800 und 1700 Decitex beträgt.

6. Hebezeug, zum Einladen in einen Hubschrauber, mit einer Winde, die in der Lage ist, ein Hubseil (1) ein- und abzurollen, bei der dieses Seil (1) irgendeinem der Ansprüche 1 bis 5 entspricht.

7. Hebezeug, zum Einladen in einen Hubschrauber, mit einer Winde mit Einfach- oder Doppeltrommel, die in der Lage ist, ein Hubseil (1) ein- und abzurollen, und eine Lagertrommel (16) für dieses Hubseil, bei der dieses Seil (1) irgendeinem der Ansprüche 1 bis 5 entspricht.

## Claims

1. A hoisting cable (1) intended to be used in a hoisting winch on board a helicopter, said cable being formed of a steel core (2) coated at its periphery with a textile sheath (3), wherein:
• said textile sheath (3) is a sheath directly braided on the steel core (2), and is made of an abrasion-resistant synthetic material,
• the average diameter of the steel core (2) is in the range from 5 to 6 millimeters, and
• the thickness of the sheath (3) is in the range from 3 to 10% of the cable diameter.

2. The hoisting cable (1) according to claim 1, wherein the synthetic material forming the textile sheath (3) is selected from the group comprising aramid, HMPE ("High Modulus Polyethylene"), and PBO (poly-p-phenylene benzobisoxazole).

3. The hoisting cable (1) according to claim 2, wherein the synthetic material is provided with anti-UV properties, and is particularly may of anti-UV aramid.

4. The hoisting cable (1) according to any of claims 1 to 3, wherein the steel core (2) is provided with anti-twist properties.

5. The hoisting cable (1) according to any of claims 1 to 4, wherein the linear mass density of the strands forming the textile sheath (3) is in the range from 800 to 1,700 decitex.

6. A hoisting device intended to be embarked on a helicopter, comprising a winch capable of winding and unwinding a hoisting cable (1), wherein said cable (1) is in accordance with any of claims 1 to 5.

7. A hoisting device intended to be embarked on of a helicopter, comprising a simple or double drum capstan winch capable of winding and unwinding a hoisting cable (1), and a storage drum (16) for said hoisting cable, wherein said cable (1) is in accordance with any of claims 1 to 5.
